# EUROPEAN PATENT SPECIFICATION

(11) **EP 3 275 063 B1**
(45) Date of publication and mention of the grant of the patent: **27.05.2020**
(21) Application number: 16713005.3
(22) Date of filing: 16.03.2016
(51) Int. Cl.: H02G 3/32

(54) **A CABLE RESTRAINT**
KABELHALTERUNG
ELEMENT DE FIXATION POUR CABLE

(30) Priority: 25.03.2015 GB 201505080
(43) Date of publication of application: 31.01.2018
(73) Proprietor: D-Line (Europe) Limited, Tyne & Wear NE29 7XH (GB)
(72) Inventor: RUDDICK, Paul David, North Shields Tyne and Wear NE29 7XH (GB)
(74) Representative: Mewburn Ellis LLP
(86) International application number: PCT/GB2016/050707
(87) International publication number: WO 2016/151286

(56) References cited:
- EP-A1- 0 956 405
- EP-A1- 1 201 841
- DE-A1-102004 036 125
- DE-U1- 29 622 162
- DE-U1- 29 818 479
- US-A1- 2002 117 321
- Ralf Jesionek ET AL: "Verkaufsleitung Verkauf Oliver von Hall Oliver Schürkes Verkauf / Disposition Nick Philipp Hikmet Güven E-Mail-Adresse Verkauf verkauf@kimmel.de", , 30 April 2014 (2014-04-30), XP55590621, Retrieved from the Internet: URL:https://www.decken-kompetenz.com/publi sh/binarydata/industrie/kimmel_-_gesamtpro gramm_uk-zubehoer.pdf [retrieved on 2019-05-21]

## Description

### Field of the Invention

The present invention relates to a cable restraint, in particular a cable restraint for retaining cables against a surface.

### Background of the Invention

Cables which supply electrical power or provide electronic connections need to be routed around buildings to serve the different areas of the building. The cables need to be held in position as they are routed around a building in order to prevent any undesirable movement of the cables. Often cables need to be retained against a flat surface. Example surfaces are ceilings, floors, and walls. Cables are also often routed through ceiling voids. Stairwells are also common areas for cable routing in buildings. When routed directly above the heads of users of the building it is particularly important that the cables do not fall down on to the users.

Fire performance cables are a particularly important example of such cables. Fire performance cables are those that provide the interconnections of the fire alarm systems, for example. It is of particular importance that fire performance cables are securely retained in position and remain so during a fire. As well as remaining in position, fire cables should remain effective (in terms of ability to maintain signal/power transmission) for as long as possible during a fire. This ensures that the fire alarm systems can still work properly for as long as possible.

It is of general importance that all cables routed around a building remain in position and do not move. However cable remaining in situ is even more important during a fire, when movement or failing of cables could block exit ways causing a danger to people exiting the building and/or fire crews who are tackling the fire. Firefighters may even become entangled in fallen cables, representing a significant danger to life.

It is known that cables may be routed through plastic trunking/conduit. The trunking/conduit is usually glued or fixed to a surface across which the cable must be routed. In the event of a fire however, the plastic trunking/conduit can melt. The melted trunking/conduit can no longer support the weight of the cable within, and the cable can fall out of the trunking/conduit. The fallen cable can then block pathways around the building. A fallen cable and/or damaged cable may also present a significant electrical hazard if the cable is live. This is a significant problem with the use of plastic trunking/conduit for the routing of cables around a building.

It is also known to provide clips to retain cables against a surface. A series of clips are used to retain cable at a series of points along the length of the cable. In conjunction, the series of clips holds the cable substantially flat against the surface.

During the installation of such clips and cables, the cables need to be threaded through each clip, this can be difficult and time-consuming for a long length of cable. Alternatively, the cable can be laid down into a series of open clips, and each of the clips then closed about the cable. When the clip is closed, some parts of the clip touch the sheathing of the cable itself. This gives the potential for damage to the cable particularly during installation.

The catalogue of Georg Kimmel GmbH 14th edition from April 2004, discloses a mounting bracket comprising a bendable strip, wherein the strip is bent at two positions along its length to form a U-shape, the strip thereby having a base, a first arm, and a second arm, wherein the first and second arms each extend from opposite ends of the base; the first arm has a first arm first edge and a first arm second edge, the first arm second edge being opposite the first arm first edge; the second arm has a second arm first edge and a second arm second edge, the second arm second edge being opposite the second arm first edge; each of the first arm edges have at least two notches formed therein, and; the notches in the first arm first edge are aligned with the notches in the first arm second edge.

The present invention seeks to avoid the disadvantages associated with the prior art.

### Summary of the Invention

In general, there is described a cable containment system comprising: A plurality of cable restraints, each comprising a bendable strip, wherein: The strip is bent at two positions along its length to form a U-shape, the strip thereby having a base, a first arm, and a second arm, wherein the first and second arms each extend from opposite ends of the base: The first arm has a first arm first edge and a first arm second edge, the first arm second edge being opposite the first arm first edge; The second arm has a second arm first edge and a second arm second edge, the second arm second edge being opposite the second arm first edge; Each of the first arm edges have at least two notches formed therein; the notches of the first arm first edge are aligned with the notches of the first arm second edge A cable restraint securing means for attaching the cable restraint to a surface; A length of plastic cable conduit, the cable conduit having a cable channel for the passage of cables, a cross-sectional area of each cable restraint being less than the cross-sectional area of the cable channel, the conduit having a hole formed there through for receipt of a screw fixing, the hole configured to be aligned with at least one cable restraint securing means; and wherein: The width of the base of each restraint is equal to an internal width of the cable channel, and; The restraints are configured to fit inside the cable channel and thereby to hold at least one cable securely within the conduit when the arms of the restraints are folded downwards.

The strip may be a generally rectangular sheet of metal, which has been folded into a U-shape. The cross-section of the restraint is generally U-shaped. This shape allows one or more cable(s) to easily be laid into the U-shaped restraint. When the cable(s) are inside the U-shaped restraint, the two arms of the restraint extend outwards perpendicularly from the base, each arm being located on opposite sides of the cable(s). To retain the cable(s) within the restraint the arms can be folded towards the base. When the arms are folded, a section of each arm is bent over to be generally parallel to the base. Folding the sections of the arms towards the base equates to folding towards the cable(s) which are laid on the base. This folding down substantially closes the restraint to form a restraint channel through the restraint. The restraint channel is formed by the folded arms and the base. The cables then pass through the restraint in the restraint channel. The restraint channel may have a generally rectangular cross-section.

The folding of the arms to form a closed restraint with a generally rectangular cross section is made greatly easier and more consistent by the provision of notches on the arms. Each notch comprises a region of an arm at an edge of the arm where a small section of material has been removed from the edge of the restraint. The aligned notches on opposite sides of each arm mean that between the notches the strip is narrower than across the restraint in an area which is not between two notches. This means that when force is applied to an arm to fold the arm into the closed position, the arm is narrower between a pair of notches, and the restraint bends more readily between the notches than at a position not between a pair of notches. Each opposing pair of notches provides a potential straight fold line for a given arm. The position of each fold is effectively predefined by the position of the notches located at either end of the fold line.

By the provision of at least two notches on each arm there is provided a number of possible fold line positions for each arm. By careful application of force, the user can then choose which pair of notches between which they intend to fold the arm. The notches are provided at intervals along the arm, and so allow the user to choose the length of the folded section of the arm. This in turn allows the user control the size of the restraint channel in which the cable(s) will be retained. The restraint can thereby be used to accommodate cables of different sizes. The arms of the restraint need not be folded down to touch the cable therefore. The size of the restraint channel in the cable restraint is defined by the position of the fold lines, which in turn are defined by the position of the notches provided on the arms. For example, if each arm of the restraint has two notches on each edge, then there will be two possible folding lines for each arm; if there are three notches on each edge, then there will be three possible folding lines for each arm, etc. Optional features of the invention will now be set out. These are applicable singly or in any combination with any aspect of the invention.

Advantageously, a cable restraint according to claim 2 is provided.

Where each of the two arms are provided with at least two notches, then the folding line position of each arm can be determined by a user independently of the other arm. The first arm need not be folded at the same position along its length as the second arm, for example.

Conveniently, a cable restraint according to claim 3 is provided.

Preferably, a cable restraint according to claim 4 is provided.

Advantageously, a cable restraint according to claim 5 is provided.

The provision of a score-line between a pair of notches slightly weakens the restraint along a potential fold line. This weakening means that when the users folds the arm, the fold preferentially occurs between a pair of notches and along a score-line. The scoring may be provided on an inner surface (the surface of the strip on the inside of the U-shaped restraint), or on an outer surface (the surface of the strip on the outside of the U-shaped restraint). Scoring may be provided on both the inner and the outer surfaces.

Conveniently, a cable restraint according to claim 6 is provided.

Preferably, a cable restraint according to claim 7 is provided.

Advantageously, a cable restraint according to claim 8 is provided.

The securing means allows the restraint to be fixedly retained against a surface. The securing means may include a hole for the receipt of screw fixing. The screw fixing passes through the restraint and into the surface against which the restraint is to be fixed. The head of the screw does not pass through the hole, and thereby abuts against the cable restraint, holding the restraint against the surface.

As will be appreciated by those skilled in the art, the screw fixing could be of any suitable type known in the art, for example a shot-fire screw fixing or a screw-fixed steel fixing.

Conveniently, a cable restraint according to claim 9 is provided.

The restraining portion of each arm is a section of the arm that is folded towards the base. There may be a section of each arm that is not folded towards the base and remains substantially perpendicular to the base. When cable(s) has/have been laid in the U-shaped, the restraining portion of each arm may be over at least a section of the base and over at least a section of the cables. The presence of the restraining portions over the cable(s) prevents the cable(s) from being removed from the closed restraint. The restraining portions may also prevent the cable(s) from falling from the restraint. It will be understood that the restraint could be mounted to the ceiling via the base. In this case the cable(s) may rest on the restraining portions of the arms rather than the base due to gravity.

Preferably, a cable restraint according to claim 10 is provided.

The at least partial overlapping of the restraining portions with one another when they have been folded downwards towards the base allows the restraint channel through which the cables pass to be completely closed about its perimeter. The absence of a gap between the restraining portions may further substantially prevent cables from being removed from the restraint, even if the cable is pulled. It may be that the restraining portions are overlapped with each other along their full lengths.

Advantageously, a cable restraint according to claim 11 is provided.

The ends of the restraining portions of each arm may meet one another when in the folded position. This means that there is no gap between the ends of the restraining portions. The absence of a gap between the restraining portions may further substantially prevent cables from being removed from the restraint, even if the cable is pulled.

Conveniently, a cable restraint according to claim 12 is provided.

A cable clip constructed of a malleable material means that the material may easily be bent by a user into the folded, closed position without structural damage to the material of the restraint.

An example suitable material for use for the cable restraint is mild steel. Mild steel in particular has been found to have suitable characteristics for the folding of the arms without damaging the material itself. Mild steel also has a suitably high melting point to avoid structural failure during a building fire. This ensures that cables passing through a restraint are securely retained against the mounting surface by the restraint during a fire.

Because there is provided a conduit/trunking, the cable(s) is/are laid in the conduit, and at certain intervals the cable(s) pass through a cable restraint. Because the system comprises more than one restraint, the restraints may be distanced from one another along the cable conduit. The restraints may fit inside the conduit. Each restraint may fit snugly within the conduit. In this system, the conduit may protect the cable from snags and damage day-to-day, while in the event of a fire and the melting of the conduit, the cable restraints ensure that the cable(s) remain safely secured to the surface. Advantageously, a cable containment system according to claim 22 is provided.

The cable restraints may be disposed at equal separations along the length of the conduit when installed. Alternatively, the restraints may be spaced at unequal separations. That the user may decide on the positioning of the clips along the conduit means that the user may comply with different regulations or upon technical considerations, such as the type of cables used or location of the routing, for example. Such regulations may be based on minimum spacing between clips for example. The user may also be able to use the placement of the clips to securely restrain cables in difficult areas, for example cables passing around corners or around obstacles.

It may be important that the cable restraints may have a cross-sectional area that is smaller than the cross-sectional area of the conduit/trunking. This means that there is an air channel passing through the conduit adjacent to the cables. This channel may allow airflow along the conduit/trunking. The cross sectional area of the restraint channel may be less than 50% of the cross-sectional area of the conduit.

The conduit may also need to be attached to the surface over which the cable(s) is/are to be routed. The alignment of the conduit securing means and the restraint securing means enables a common securing element to be used to secure both the conduit and a cable restraint to the surface. For example, the conduit and the cable restraint may each include a hole for the receipt of a screw. The conduit and cable holes may be able to be aligned with one another. This alignment means that a single screw may pass first through the restraint and then through the conduit/trunking and into the surface for attachment. The screw hole in the restraint may be centrally located in the base of the restraint and the screw hole in the conduit/trunking centrally located. A snug fit of the restraint within the conduit/trunking thereby ensures the alignment of the holes in a direction across the conduit/trunking and restraint.

If the conduit/trunking is made from plastic then it may be easier for a user to drill holes in the conduit for securing the conduit/trunking to a surface. If the user can choose the position of the holes in the trunking, then they are able to also choose the positions along the trunking of the restraints, where each restraint may have a hold to be aligned with a user-made hole in the trunking.

### Brief Description of the Drawings

Embodiments of the invention will now be described by way of example with reference to the accompanying drawings in which:
Figure 1 shows an isometric view of a cable restraint, and
Figure 2 shows a side view of a a cable restraint,
Figure 3 shows an isometric view of a cable restraint,
Figure 4 shows a cross-sectional view of a cable restraint,

### Detailed Description of the Drawings

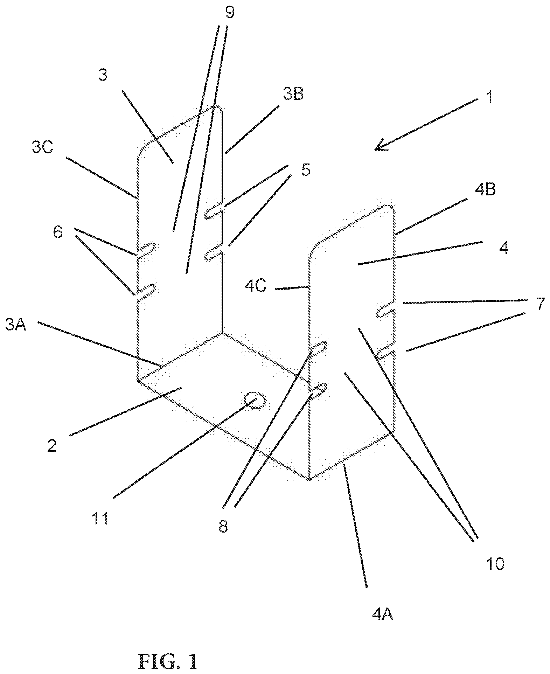

Figure 1 shows a cable restraint 1 having a base 2, a first arm 3 and a second arm 4. The strip has been bent in two locations 3A and 4A to form the U-shaped restraint. The first arm 3 has been bent at position 3A to be generally perpendicular to the base 2. The second arm 4 has been bent at position 4A to be generally perpendicular to the base 2. The first arm 3 has two notches 5 on the first edge 3B of the first arm, and two notches 6 on the second edge 3C of the first arm 3. The first arm first edge 3B is opposite the first arm second edge 3C. The notches 5 on the first arm first edge 3B are aligned with the notches 8 on the first arm second edge 3C.

The second arm 4 has two notches 7 on the first edge 4B of the second arm 4, and two notches 8 on the second edge 4C of the second arm 4. The second arm first edge 4B is opposite the second arm second edge 4C. The notches 7 on the second arm first edge 4B are aligned with the notches 8 on the second arm second edge 4C.

In the illustrated embodiment there are two notches 5, 6, 7, 8 on each of the edges 3B, 3C, 4B, 4C of the arms 3, 4 of the restraint 1. There may be more than two notches on each edge. For example, there may be 2, 3, 4, 5 etc notches on each arm edge, for example.

In figure 1, the cable restraint 1 is symmetrical. It will be understood that to enjoy the benefits of the present invention that the restraint does not need to be symmetrical. For example, the arms of the restraint may not be the same length.

For each arm, potential fold lines are formed across the arms between opposing notches. It is generally easier to fold the arm along a fold line because the strip of material is narrowed by the presence of the notches.

In the first arm 3, there are two potential fold lines 9 formed between the notches 5 in the first arm first edge 3B and the notches 6 in the first arm second edge 3C. In the second arm 4, there are two potential fold lines 10 formed between the notches 7 in the second arm first edge 4B and the notches 8 in the second arm second edge 4C. The user is able to choose which of the fold lines 9, 10 they wish to fold a section of the arms 3, 4 towards the base along.

The cable restraint illustrated in figure 1 also has a hole 11 formed through the base 2. The hole 11 formed through the base is an example of a suitable securing means. A screw fixing may be inserted through the hole 11 to secure the restraint 1 to a surface. The outside surface of the base 2 (the surface directed away from the inside of the U-shape) may be generally flat. An outside flat surface of the base 2 may allow the base 2 of the restraint 1 to be securely retained flat against a surface, for example a wall or ceiling.

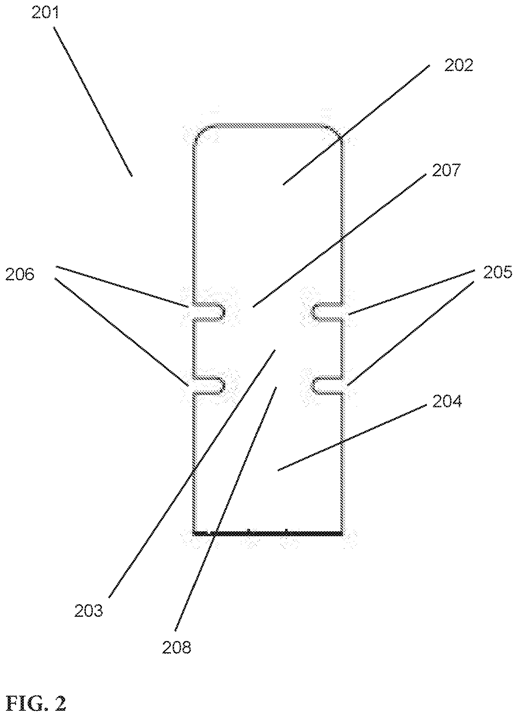

Figure 2 shows a side view of a cable restraint. The view shows an arm 201 with a first pair of notches 205 and a second opposite pair of notches 206. The view shows an upper region 202 of the arm 201, an intermediate region 203 and a lower region 204. There are two potential fold lines 207, 208, formed between notches comprised in the first notches 205 and the second notches 207. When the arm 201 is folded by a user, they can choose whether to fold along the upper fold line 207 or the lower fold line 208.

In the event that the user folds along the upper fold line 207, then the upper section 202 will be folded generally perpendicular to the both the intermediate section 203 and the lower section 204. In this case, the intermediate section 203 and the lower section 204 will remain generally coplanar with each other.

In the event that the user folds along the lower fold line 208, then the upper section 202 and the intermediate section 203 will both be folded generally perpendicular to the lower section 204. In this case, the intermediate section 203 and the upper section 202 will remain generally coplanar with each other.

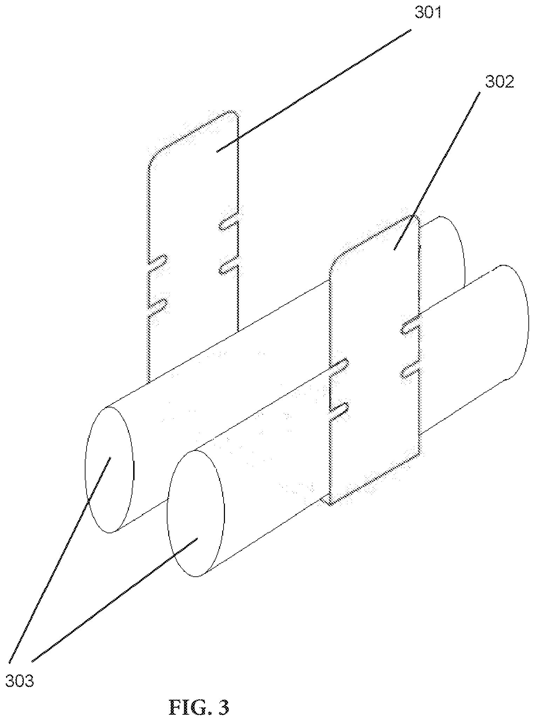

Figure 3 shows a cable restraint with a pair of cables 303 located between the first arm 301 and second arm 302. It will be understood that the cables shown in figure 2 are shown as illustrative an example only. There may equally be only a single cable laid through the restraint, or there may be a plurality of cables laid through a restraint. The cables may be laid side by side or they may be laid one on top of the other. The cables may be of different dimensions to the cables 303 shown in figure 3. The cables may also have a different cross-sectional shape to those shown in figure 3.

It will be understood that only a short length of cables are shown for clarity in figure 3. The length of cable which may extend from either side of the restraint may generally be of any suitable length. A long length of cable may be retained against a wall by the use of a plurality of cable restraints located along the length of the cable(s).

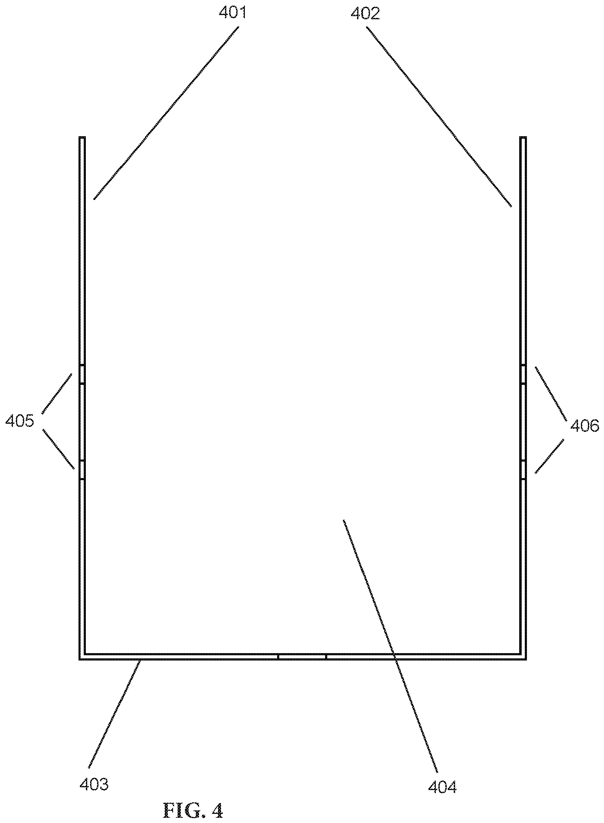

Figure 4 shows a cross sectional, end-on view of a cable restraint. The restraint has a first arm 401 and a second arm 402 and a base 403. The first arm 401, second arm 402 and base 403 form the U-shaped cross-section forming a restraint channel 404. One of more cable(s) may be laid in the restraint channel. The first arm notches 405 are shown on the on the first arm 401 and second arm notches 406 are shown on the second arm 402. Sections of the arms 401, 402 may be folded downwards towards the base 403. The fold line of the first arm 401 may located at either of the notches 405. The fold line of the second arm 402 may located at either of the notches 406.

An example not covered by the present invention is a cable containment system comprising a length of trunking and a plurality of cable restraints.

The length of trunking may have a rectangular cross section, although the skilled person will appreciate that other cross-sectional shapes are also possible. The conduit may open along its length to allow access. Such access may allow a user to lay cables along the length of the trunking.

Periodically along the length of the trunking a cable restraint may be provided. Each cable restraint fits inside the trunking. Cables that are laid in the trunking periodically pass through a cable restraint therefore. Each cable restraint includes a hole, through which a screw can pass to attach the restraint to a surface, for example a wall or ceiling. The trunking also includes a number of holes along its length. Because the restraints fit inside the trunking, the hole in the restraint and a hole in the trunking can be aligned with one another. A single screw may then pass through both the hole in the restraint and the hole in the trunking, thereby attaching the trunking and the restraint to the surface. Equally, the trunking may not be provided with holes. Instead the user may make holes in the trunking at desired locations.

The containment system may have a number of sections of trunking. The sections of conduit may be connected with one another in any known to a person of skill in the art. Each section may be straight or curved or of any suitable configuration known to those of skill in the art.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as defined in the following claims.

## Claims

1. A cable containment system comprising:
a pluralitry of cable restraints, each comprising a bendable strip, wherein:
the strip is bent at two positions along its length to form a U-shape, the strip thereby having a base, a first arm, and a second arm, wherein the frist and second arms each extend from opposite ends of the base;
the first arm has a first arm first edge and a first arm second edge, the first arm second edge being opposite the first arm first edge;
the second arm has a second arm first edge and a second arm second edge, the second arm second edge being opposite the second arm first edge;
each of the first arm edges have at least two notches formed therein;
the notches of the first arm first edge are aligned with the notches of the first arm second edge
a cable restraint securing means for attaching the cable restraint to a surface;
a length of plastic cable conduit, the cable conduit having a cable channel for the passage of cables, a cross-sectional area of each cable restraint being less than the cross-sectional area of the cable channel, the conduit having a hole formed therethrough for receipt of a screw fixing, the hole configured to be aligned with at least one cable restraint securing means; and
wherein:
the width of the base of each restraint is equal to an internal width of the cable channel, and;
the restraints are configured to fit inside the cable channel and thereby to hold at least one cable securely within the conduit when the arms of the restraints are folded downwards.

2. A cable containment system according to claim 1, wherein:
each of the second arm edges have at least two notches formed therein, and;
the notches in the second arm first edge are aligned with the notches in the second arm second edge.

3. A cable containment system according to claim 1 or claim 2, wherein:
the strip has a first surface and a second surface, and;
the first surface is scored along at least one fold line,
wherein each of the at least one fold line is between a pair of notches opposed across the strip.

4. A cable containment system according to any preceding claim, wherein:
the first surface is directed towards the inside of the U-shaped strip.

5. A cable containment system according to any one of claims 1-3, wherein:
the first surface is directed towards the outside of the U-shaped strip.

6. A cable containment system according to any preceding claim, wherein:
the cable restraint securing means comprises at least one hole formed through the base for the receipt of a screw fixing.

7. A cable containment system according to any preceding claim, wherein:
the screw fixing is a shot-fire or screw-fixed steel fixing.

8. A cable containment system according to any preceding claim, wherein:
a first restraining portion of the first arm is configured to be folded downwards along a first fold line towards the base, and;
a second restraining portion of the second arm the second arm is configured to be folded downwards along a second fold line towards the base.

9. A cable containment system according to any preceding claim, wherein:
when the first and second restraining portions are folded downwards, the first and second restraining portions at least partially overlap one another to form a cover above the base,
the clip thereby having a restraint channel through which at least one cable can pass.

10. A cable containment system according to any one of claims 1-9 wherein:
when the first and second restraining portions are folded downwards, the first and second restraining portions meet one another,
the clip thereby having a restraint channel along which at least one cable can pass.

11. A cable containment system according to any preceding claim, wherein:
the strip is made from a malleable material.

12. A cable containment system according to any preceding claim, wherein:
the strip is made from mild steel.

## Patentansprüche

1. Kabelaufnahmesystem, das Folgendes umfasst:
eine Vielzahl von Kabelhalterungen, von denen jede einen biegbaren Streifen umfasst, wobei:
der Streifen an zwei Stellen entlang seiner Länge gebogen ist, um eine U-Form auszubilden, wobei der Streifen dadurch eine Basis, einen ersten Schenkel und einen zweiten Schenkel aufweist, wobei sich der erste und der zweite Schenkel jeweils ausgehend von entgegengesetzten Enden der Basis erstrecken;
der erste Schenkel eine erste Kante des ersten Schenkels und eine zweite Kante des ersten Schenkels aufweist, wobei die zweite Kante des ersten Schenkels der ersten Kante des ersten Schenkels gegenüberliegt;
der zweite Schenkel eine erste Kante des zweiten Schenkels und eine zweite Kante des zweiten Schenkels aufweist, wobei die zweite Kante des zweiten Schenkels der ersten Kante des zweiten Schenkels gegenüberliegt;
jede der Kanten des ersten Schenkels zumindest zwei darin ausgebildete Aussparungen aufweist;
die Aussparungen der ersten Kante des ersten Schenkels mit den Aussparungen der zweiten Kante des ersten Schenkels fluchtend ausgerichtet sind;
ein Kabelhalterungsbefestigungsmittel zum Anbringen der Kabelhalterung an einer Oberfläche;
eine Länge einer Kunststoffkabelführung, wobei die Kabelführung einen Kabelkanal zur Durchführung von Kabeln aufweist, wobei eine Querschnittsfläche jeder Kabelhalterung kleiner ist als die Querschnittsfläche des Kabelkanals, wobei die Führung ein zur Aufnahme einer Schraubbefestigung durch diese hindurch ausgebildetes Loch aufweist, wobei das Loch ausgelegt ist, mit zumindest einem Kabelhalterungsbefestigungsmittel fluchtend ausgerichtet zu sein; und
wobei:
die Breite der Basis jeder Halterung gleich einer Innenbreite des Kabelkanals ist und;
die Halterungen ausgelegt sind, in das Innere des Kabelkanals zu passen und dadurch zumindest ein Kabel sicher innerhalb der Führung zu halten, wenn die Schenkel der Halterungen nach unten gefaltet sind.

2. Kabelaufnahmesystem nach Anspruch 1, wobei:
jede der Kanten des zweiten Schenkels zumindest zwei darin ausgebildete Aussparungen aufweist und;
die Aussparungen in der ersten Kante des zweiten Schenkels fluchtend mit den Aussparungen in der zweiten Kante des zweiten Schenkels ausgerichtet sind.

3. Kabelaufnahmesystem nach Anspruch 1 oder Anspruch 2, wobei:
der Streifen eine erste Fläche und eine zweite Fläche aufweist und;
die erste Fläche entlang zumindest einer Faltlinie eingekerbt ist,
wobei jede der zumindest einen Faltlinie zwischen einem Paar Aussparungen angeordnet ist, die einander über den Streifen hinweg gegenüberliegen.

4. Kabelaufnahmesystem nach einem der vorangegangenen Ansprüche, wobei:
die erste Oberfläche in Richtung der Innenseite des U-förmigen Streifens ausgerichtet ist.

5. Kabelaufnahmesystem nach einem der Ansprüche 1 bis 3, wobei:
die erste Oberfläche in Richtung der Außenseite des U-förmigen Streifens ausgerichtet ist.

6. Kabelaufnahmesystem nach einem der vorangegangenen Ansprüche, wobei:
das Kabelhalterungsbefestigungsmittel zumindest ein Loch umfasst, das zur Aufnahme einer Schraubbefestigung durch die Basis hindurch ausgebildet ist.

7. Kabelaufnahmesystem nach einem der vorangegangenen Ansprüche, wobei:
die Schraubbefestigung eine Schuss- oder Schraubbefestigungsstahl-Befestigung ist.

8. Kabelaufnahmesystem nach einem der vorangegangenen Ansprüche, wobei:
ein erster Halteabschnitt des ersten Schenkels ausgelegt ist, entlang einer ersten Faltlinie in Richtung der Basis nach unten gefaltet zu sein und;
ein zweiter Halteabschnitt des zweiten Schenkels ausgelegt ist, entlang einer zweiten Faltlinie in Richtung der Basis nach unten gefaltet zu sein.

9. Kabelaufnahmesystem nach einem der vorangegangenen Ansprüche, wobei:
der erste und der zweite Halteabschnitt einander zumindest teilweise überlappen, um eine Abdeckung über der Basis auszubilden, wenn der erste und der zweite Halteabschnitt nach unten gefaltet sind,
wobei die Klammer dadurch einen Haltekanal aufweist, durch den zumindest ein Kabel geführt werden kann.

10. Kabelaufnahmesystem nach einem der Ansprüche 1 bis 9, wobei:
der erste und der zweite Halteabschnitt aufeinandertreffen, wenn der erste und der zweite Halteabschnitt nach unten gefaltet sind,
wobei die Klammer dadurch einen Haltekanal aufweist, entlang dessen zumindest ein Kabel geführt werden kann.

11. Kabelaufnahmesystem nach einem der vorangegangenen Ansprüche, wobei:
der Streifen aus einem verformbaren Material besteht.

12. Kabelaufnahmesystem nach einem der vorangegangenen Ansprüche, wobei:
der Streifen aus Baustahl besteht.

## Revendications

1. Système de confinement de câbles comprenant :
une pluralité de dispositifs de retenue de câble, comprenant chacun une bande pliable, dans lequel :
la bande est pliée en deux positions le long de sa longueur pour former une forme en U, la bande ayant ainsi une base, un premier bras et un second bras, dans lequel les premier et seconds bras s'étendent chacun à partir d'extrémités opposées de la base ;
le premier bras a un premier bord de premier bras et un second bord de premier bras, le second bord de premier bras étant opposé au premier bord de premier bras ;
le second bras a un premier bord du second bras et un second bord du second bras, le second bord de second bras étant opposé au premier bord de second bras ;
chacun des premiers bords de bras a au moins deux encoches formées en son sein ;
les encoches du premier bord de premier bras sont alignées avec les encoches du second bord de premier bras
un moyen de fixation de dispositif de retenue de câble pour fixer le dispositif de retenue de câble à une surface ;
une longueur de conduit de câbles en plastique, le conduit de câbles ayant un canal de câbles pour le passage de câbles, une aire de section transversale de chaque dispositif de retenue de câble étant inférieure à l'aire de section transversale du canal de câbles, le conduit ayant un trou formé à travers celui-ci pour réception d'une fixation par vis, le trou étant configuré pour être aligné avec au moins un moyen de fixation de dispositif de retenue de câble ; et
dans lequel :
la largeur de la base de chaque dispositif de retenue est égale à une largeur interne du canal de câbles, et ;
les dispositifs de retenue sont configurés pour s'ajuster à l'intérieur du canal de câbles et ainsi maintenir au moins un câble solidement à l'intérieur du conduit lorsque les bras des dispositifs de retenue sont repliés vers le bas.

2. Système de confinement de câbles selon la revendication 1, dans lequel :
chacun des seconds bords de bras a au moins deux encoches formées en son sein, et ;
les encoches du premier bord de second bras sont alignées avec les encoches du second bord de second bras.

3. Système de confinement de câbles selon la revendication 1 ou la revendication 2, dans lequel :
la bande a une première surface et une seconde surface, et ;
la première surface est rainurée le long d'au moins une ligne de pliage,
dans lequel chacune de la au moins une ligne de pliage se situe entre une paire d'encoches opposées à travers la bande.

4. Système de confinement de câbles selon l'une quelconque des revendications précédentes, dans lequel :
la première surface est dirigée vers l'intérieur de la bande en forme de U.

5. Système de confinement de câbles selon l'une quelconque des revendications 1 à 3, dans lequel :
la première surface est dirigée vers l'extérieur de la bande en forme de U.

6. Système de confinement de câbles selon l'une quelconque des revendications précédentes, dans lequel :
le moyen de fixation de dispositif de retenue de câble comprend au moins un trou formé à travers la base pour la réception d'une fixation par vis.

7. Système de confinement de câbles selon l'une quelconque des revendications précédentes, dans lequel :
la fixation par vis est une fixation en acier à grenaille ou à vis.

8. Système de confinement de câbles selon l'une quelconque des revendications précédentes, dans lequel :
une première partie de retenue du premier bras est configurée pour être pliée vers le bas le long d'une première ligne de pliage vers la base, et ;
une seconde partie de retenue du seconde bras est configurée pour être pliée vers le bas le long d'une seconde ligne de pliage vers la base.

9. Système de confinement de câbles selon l'une quelconque des revendications précédentes, dans lequel :
lorsque les première et seconde portions de retenue sont repliées vers le bas, les première et seconde portions de retenue se chevauchent au moins partiellement pour former un couvercle au-dessus de la base,
l'attache ayant ainsi un canal de dispositif de retenue à travers lequel au moins un câble peut passer.

10. Système de confinement de câbles selon l'une quelconque des revendications 1 à 9, dans lequel :
lorsque les première et seconde parties de retenue sont repliées vers le bas, les première et seconde parties de retenue se rencontrent,
l'attache ayant ainsi un canal de dispositif de retenue le long duquel au moins un câble peut passer.

11. Système de confinement de câbles selon l'une quelconque des revendications précédentes, dans lequel :
la bande est réalisée en un matériau malléable.

12. Système de confinement de câbles selon l'une quelconque des revendications précédentes, dans lequel :
la bande est réalisée en acier doux.
